# EUROPEAN PATENT APPLICATION

(11) **EP 1 441 282 A2**
(43) Date of publication of application: **28.07.2004**
(21) Application number: 04250368.0
(22) Date of filing: 23.01.2004
(51) Int. Cl.: G06F 3/16, H04M 1/247

(54) **Information service with text-to-speech conversion**

(30) Priority: 27.01.2003 JP 2003017261
(71) Applicant: CANON KABUSHIKI KAISHA, Tokyo (JP)
(72) Inventor: Kuboyama, Hideo, Tokyo (JP); suzuki, Kazuko, Tokyo (JP)
(74) Representative: Beresford, Keith Denis Lewis

(57) **Abstract**

An information output method switching unit (105) checks whether or not an audio output device (103) is connected to an audio output device connection unit (104). When the audio output device (103) is connected to an information service apparatus, the information output method switching unit (105) sends text information stored in an information holding unit (102) to a text-to-speech synthesis unit (106), which generates synthetic speech using a known text-to-speech synthesis technique, and sends the generated synthetic speech to the audio output device connection unit (104). On the other hand, when the audio output device (103) is not connected to the information service apparatus, the information output method switching unit (105) sends text information stored in the information holding unit (102) to an information display output unit (107), which displays the received text information.

## Description

### FIELD OF THE INVENTION

The present invention relates to an information service apparatus and information service method, which provide text information of e-mail, Web information, and the like to the user.

### BACKGROUND OF THE INVENTION

Currently, computers and communication technologies such as the Internet and the like have advanced, and new information service methods such as a home page that places latest news articles, a service that delivers news articles via e-mail messages, and the like have prevailed. It is desirable for such information service method to immediately notify information wherever the user is.

It is desired for such information service not only to visually notify information by displaying information on the display screen of a display unit such as a display or the like but also to audibly notify information, and a technique that provides text information to the user by reading it aloud by text-to-speech synthesis means is already available. An audible information service has a feature that allows "side-task information collection" (e.g., while cleaning, driving a vehicle, and so forth) without distracting user's attention.

Under these circumstances, the following information service method may be proposed. That is, communication means is provided to a user terminal which has music playback means and text-to-speech synthesis means, and that user terminal is connected to a network. When the user terminal receives information such as e-mail, news, or the like, the received information is notified after text-to-speech synthesis. With this method, when information is delivered while the user is listening to music using the user terminal, incoming information is converted into speech by the text-to-speech synthesis means, and is notified while being superposed on the music. The user can acquire new arrival information while listening to music.

When information is output after it is converted into synthetic speech by text-to-speech synthesis, the user can easily acquire information without paying any attention. However, such audible output may be distracting to all around the user depending on an output device and location, and private information may be heard by a third party. For example, when a portable terminal without any headphone receives an e-mail message in a public area such as on a train, and notifies the user of that e-mail message by speech via a built-in loudspeaker, that speech becomes noise that disturbs everybody on the train. Also, the user may feel disgraced since such speech captures everyone's attention on that train, and the contents of user's private information may be heard.

In such situation, it is desired to provide information by displaying it on the display screen of the display unit rather than speech. However, it is troublesome for the user to sequentially change an information service method while the environment around the user changes dynamically.

### SUMMARY OF THE INVENTION

The present invention has been made in consideration of the aforementioned problems, and has as its object to provide an information service apparatus and information service method, which can appropriately switch means for providing information to the user in correspondence with an information acquisition environment of that user.

In order to achieve the above object, for example, an information service apparatus of the present invention comprises the following arrangement.

That is, an information service apparatus which comprises display means for displaying text information, and can be connected to an audio output device that can output speech information corresponding to the text information, characterized by comprising:
determination means for determining if the audio output device is connected; and
switching control means for making output destination switching control that outputs the speech information corresponding to the text information to the audio output device when the determination means determines that the audio output device is connected, and outputs the text information to the display means when the determination means determines that the audio output device is not connected.

In order to achieve the above object, for example, an information service apparatus of the present invention comprises the following arrangement.

That is, an information service apparatus which comprises display means for displaying text information, text-to-speech synthesis means for executing a text-to-speech synthesis process on the basis of the text information to generate synthetic speech, and audio output means that can output the synthetic speech, characterized by comprising:
reception means for receiving information indicating a type of space;
determination means for determining a type of space indicated by the information with reference to the information received by the reception means; and
switching control means for making output destination switching control that outputs the synthetic speech generated by the text-to-speech synthesis means to the audio output means, or outputs the text information to the display means, in accordance with a determination result of the determination means.

In order to achieve the above object, for example, an information service apparatus of the present invention comprises the following arrangement.

That is, an information service apparatus which comprises display means for displaying text information, text-to-speech synthesis means for executing a text-to-speech synthesis process on the basis of the text information to generate synthetic, and audio output means that can output the synthetic speech, characterized by comprising:
reception means for receiving information used to specify an external apparatus;
holding means for holding a list of information used to specify the external apparatus present in a predetermined space, and
switching control means for making output destination switching control that outputs the synthetic speech generated by the text-to-speech synthesis means to the audio output means, or outputs the text information to the display means, depending on whether or not the information received by the reception means is included in the list.

In order to achieve the above object, for example, an information service method of the present invention comprises the following arrangement.

That is, an information service method to be executed by an information service apparatus which comprises display means for displaying text information, and can be connected to an audio output device that can output speech information corresponding to the text information, characterized by comprising:
a determination step of determining if the audio output device is connected; and
a switching control step of making output destination switching control that outputs the speech information corresponding to the text information to the audio output device when it is determined in the determination step that the audio output device is connected, and outputs the text information to the display means when it is determined in the determination step that the audio output device is not connected.

In order to achieve the above object, for example, an information service method of the present invention comprises the following arrangement.

That is, an information service method to be executed by an information service apparatus which comprises display means for displaying text information, text-to-speech synthesis means for executing a text-to-speech synthesis process on the basis of the text information to generate synthetic speech, and audio output means that can output the synthetic speech, characterized by comprising:
a reception step of receiving information indicating a type of space;
a determination step of determining a type of space indicated by the information with reference to the information received in the reception step; and
a switching control step of making output destination switching control that outputs the synthetic speech generated by the text-to-speech synthesis means to the audio output means, or outputs the text information to the display means, in accordance with a determination result in the determination step.

In order to achieve the above object, for example, an information service method of the present invention comprises the following arrangement.

That is, an information service method to be executed by an information service apparatus which comprises display means for displaying text information, text-to-speech synthesis means for executing a text-to-speech synthesis process on the basis of the text information to generate synthetic speech, and audio output means that can output the synthetic speech, characterized by comprising:
a reception step of receiving information used to specify an external apparatus;
a holding step of holding a list of information used to specify the external apparatus present in a predetermined space, and
a switching control step of making output destination switching control that outputs the synthetic speech generated by the text-to-speech synthesis means to the audio output means, or outputs the text information to the display means, depending on whether or not the information received in the reception step is included in the list.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing the functional arrangement of an information service apparatus according to the first embodiment of the present invention;
Fig. 2 is a flow chart of a process for providing text information to the user when the information service apparatus according to the first embodiment of the present invention receives text information such as e-mail, Web information, or the like;
Fig. 3 is a view showing a state wherein when the user wears an audio output device connected to the information service apparatus, the contents of a received e-mail message are provided by synthetic speech;
Fig. 4 is a view showing a state wherein when no audio output device 103 is connected to an information service apparatus 301, the contents of a received e-mail message are provided by displaying them on an information display output unit 107;
Fig. 5 is a block diagram showing the functional arrangement of an information service apparatus according to the second embodiment of the present invention;
Fig. 6 is a block diagram showing the functional arrangement of an information service apparatus according to the third embodiment of the present invention;
Fig. 7 is a block diagram showing the functional arrangement of an information service apparatus according to the fourth embodiment of the present invention;
Fig. 8 is a block diagram showing the functional arrangement of an information service apparatus according to the fifth embodiment of the present invention;
Fig. 9 is a block diagram showing the functional arrangement of an information service apparatus according to the seventh embodiment of the present invention;
Fig. 10 shows an example of meta information;
Fig. 11 shows a list of information devices present in private spaces; and
Fig. 12 is a flow chart of a process to be executed by the information service apparatus according to the seventh embodiment of the present invention.

### DETAILED DESCRIPTION OF THE PREFERRED EMBODIMENTS

Preferred embodiments of the present invention will now be described in detail in accordance with the accompanying drawings.

### [First Embodiment]

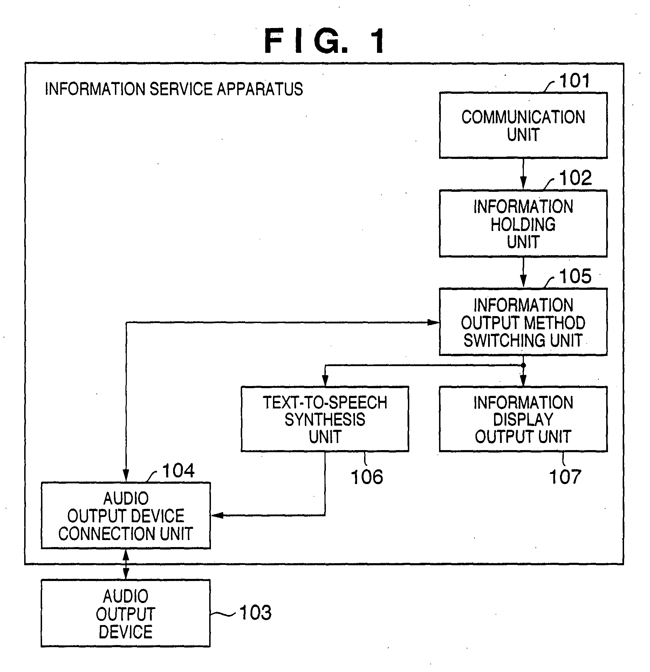

Fig. 1 is a block diagram showing the functional arrangement of an information service apparatus according to this embodiment. Referring to Fig. 1, reference numeral 101 denotes a communication unit which communicates with a network such as the Internet, portable phone communication network, or the like via a wireless or wired communication to exchange information. Reference numeral 102 denotes an information holding unit which holds text information such as e-mail messages, Web information, and the like received via the communication unit 101. Reference numeral 103 denotes an audio output device such as a headphone, headset, or the like, used by the user to listen to audio or music data so as to seal them from leaking externally. Reference numeral 104 denotes an audio output device connection unit which serves as an I/F that connects the audio output device 103 to the information service apparatus, generates a signal based on audio or music information from the information service apparatus, and outputs that signal to the audio output device 103. Reference numeral 105 denotes an information output method switching unit which determines an information service method, i.e., whether information is to be output audibly or visually, and controls respective units in accordance with the determination result so as to audibly or visually output information. Reference numeral 106 denotes a text-to-speech synthesis unit which generates synthetic speech by known text-to-speech synthesis on the basis of text information such as an e-mail message, Web information, and the like. Reference numeral 107 denotes an information display output unit such as a display which visually outputs the e-mail message, Web information, and the like.

This embodiment assumes a portable terminal such as a PDA, portable phone, notebook type personal computer as the information service apparatus. However, the present invention is not limited to this, and may be applied to a non-portable terminal such as a PC (personal computer) or the like. The aforementioned functional arrangement may be implemented by a program. In this case, this program is stored in a ROM (not shown) of the information service apparatus, and when the program is executed by a CPU (not shown), the information service apparatus can implement the aforementioned functions.

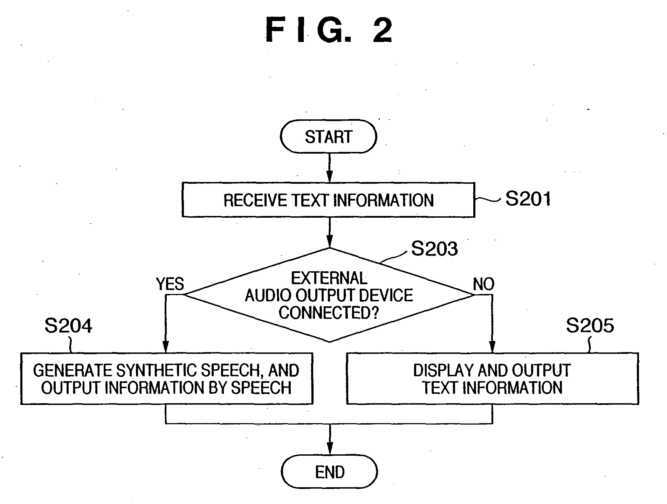

Fig. 2 is a flow chart of the process for providing text information when the information service apparatus receives text information such as an e-mail message, Web information, or the like.

The communication unit 101 receives text information such as an e-mail message, Web information, or the like from the network (step S201). The received text information is held in the information holding unit 102. The information output method switching unit 105 checks if the audio output device 103 is connected to the audio output device connection unit 104 (step S203). Note that the audio output device 103 may be connected via either a jack of a wired cable or a wireless communication such as Bluetooth or the like. If the audio output device 103 is connected to the information service apparatus, the information output method switching unit 105 sends the text information held by the information holding unit 102 to the text-to-speech synthesis unit 106, which generates synthetic speech using a known text-to-speech synthesis technique, and outputs the generated synthetic speech to the audio output device connection unit 104 (step S204). As a result, the audio output device connection unit 104 outputs a synthetic speech signal to the audio output device 103.

On the other hand, if the audio output device 103 is not connected to the information service apparatus, the information output method switching unit 105 sends the text information held by the information holding unit 102 to the information display output unit 107, which displays the received text information (step S205).

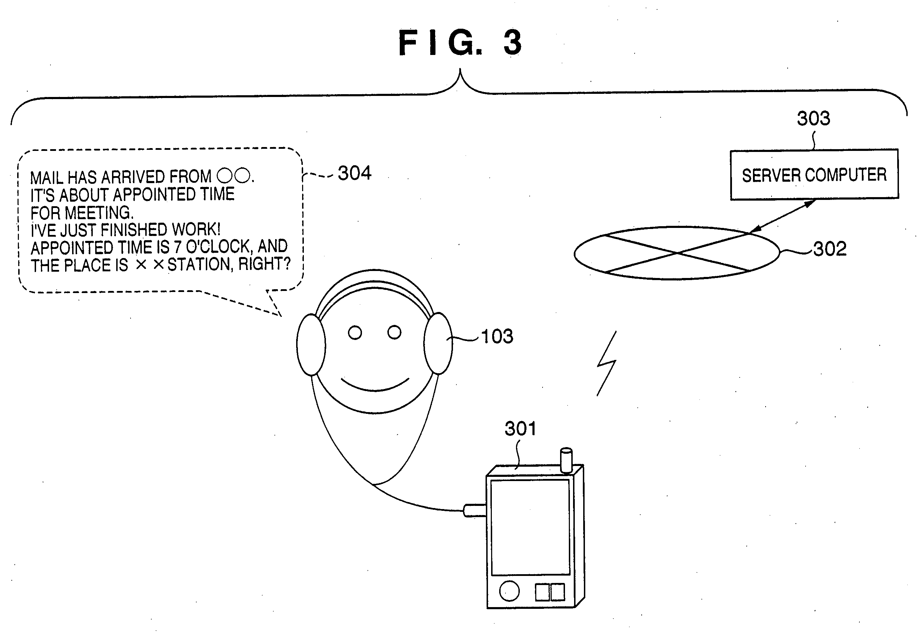

Fig. 3 shows a state wherein the contents of a received mail message are provided by synthetic speech when the user wears the audio output device connected to the information service apparatus. Referring to Fig. 3, reference numeral 301 denotes the aforementioned information service apparatus. Reference numeral 302 denotes a network such as the Internet, portable phone communication network, or the like via which the communication unit 101 makes data communications with a server computer 303 (to be described below). The server computer 303 serves as a mail server or Web server, which transmits the text information to the information service apparatus 301 via the network 302. Reference numeral 304 denotes audio information which is converted from text information by the text-to-speech synthesis process, and is output to the headphone 103 (audio output device) that the user wears.

Referring to Fig. 3, the user connects the audio output device 103 to the information service apparatus 301. In this case, when the information service apparatus 301 acquires an e-mail message from the server computer 303 via the network 302, since the headphone 103 is connected to the information service 301, the information output method switching unit 105 instructs the text-to-speech synthesis unit 106 to generate synthetic speech which represents the contents of text information of the acquired e-mail message by a known text-to-speech synthesis technique based on that text information. The generated synthetic speech is output to the headphone 103 as the audio information 304 in Fig. 3.

Note that a message "Mail has arrived from ○○" may be held as a template in the text-to-speech synthesis unit 106, and as "○○", a mail address may be read aloud, or a mail address and user name may be held in association with each other, and the user name corresponding to the mail address of the received e-mail message may be read aloud. In this case, the text-to-speech synthesis unit 106 must generate synthetic speech of this user name.

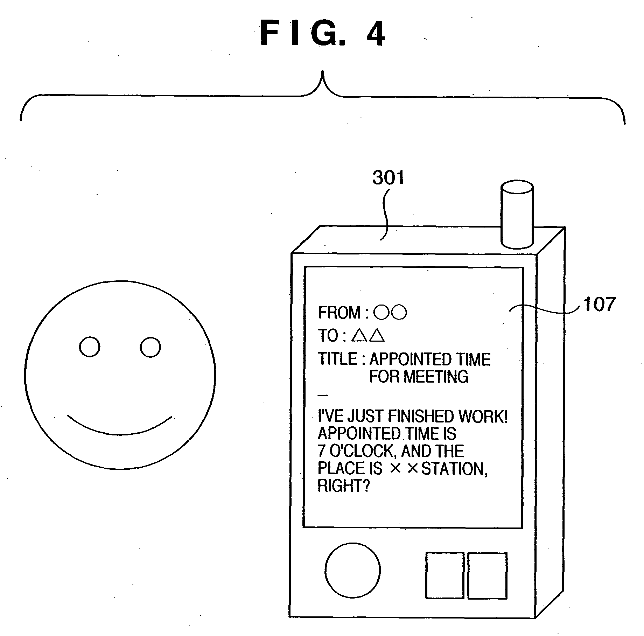

Fig. 4 shows a state wherein the information display output unit 107 displays the contents of a received e-mail message when the audio output device 103 is not connected to the information service apparatus 301. Referring to Fig. 4, since the audio output device 103 is not connected to the information service apparatus 301, when the information service apparatus 301 acquires an e-mail message from the server computer 303 via the network 302, the information output method switching unit 105 controls the information display output unit 107 to display text information indicating the contents of the received e-mail message.

In the description using Figs. 3 and 4, the received information is an e-mail message. The same process applies when Web information is received. In this case, the aforementioned template is not required.

As described above, with the information service apparatus according to this embodiment, information can be provided to the user without leaking private contents to a third party or making trouble for a third party.

### [Second Embodiment]

The information service apparatus according to the first embodiment switches the information service method to an audible or visible output depending on whether or not the audio output device 103 is connected. When information is provided by means of a visible output, a notification tone or vibrator may be used to notify the user that information is to be provided by means of a visible output.

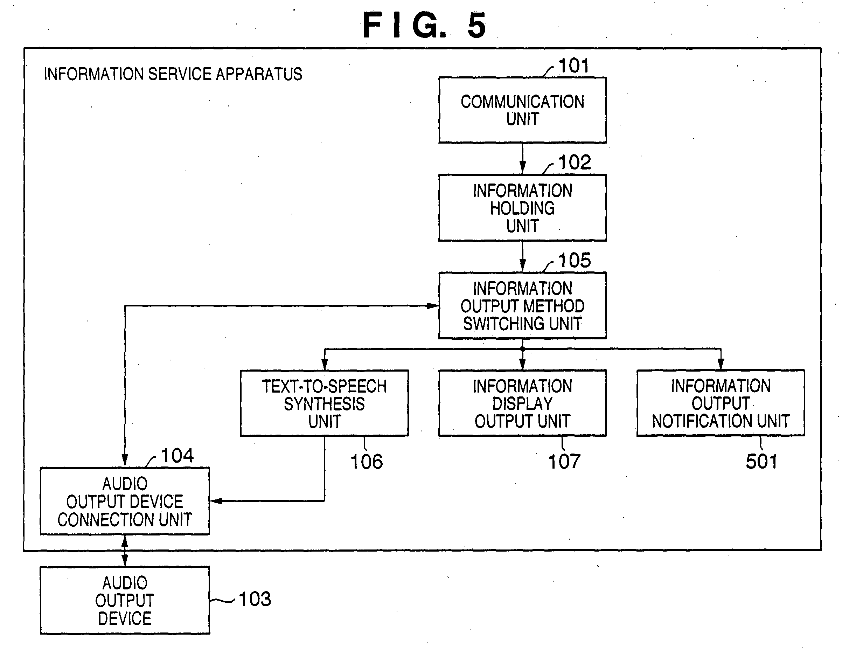

Fig. 5 is a block diagram showing the functional arrangement of an information service apparatus according to this embodiment. Note that the same reference numerals in Fig. 5 denote the same parts as those in Fig. 1, and a description thereof will be omitted. Referring to Fig. 5, reference numeral 501 denotes an information output notification unit which notifies the user that information is to be provided by means of a visible output by one of means such as a notification tone output, vibrator, display of an icon that notifies that information is to be provided by means of a visible output on the information display output unit 107, and the like, or a plurality of means as a combination of these means.

When the information output method switching method 105 determines that information is to be provided by means of a visible output, it instructs the information output notification unit 501 to notify of it using one or a combination of the aforementioned means. Also, similar notification may be made when information is to be audibly provided.

### [Third Embodiment]

In the first and second embodiments, synthetic speech generated by the text-to-speech synthesis unit 106 is directly output. However, the user may be listening to music or the like while he or she wears the audio output device 103. That is, another sound (music) may have already been output to the audio output device 103.

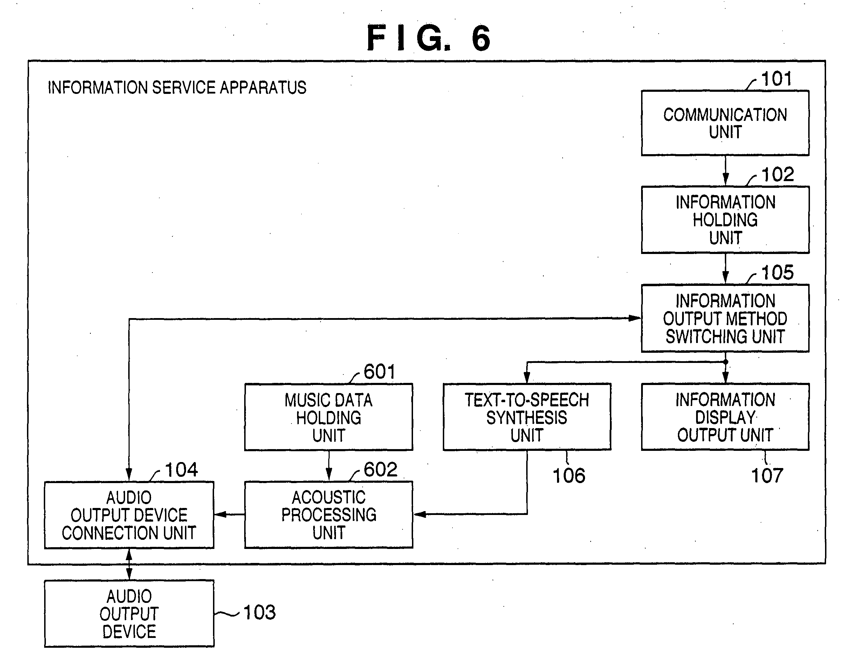

Hence, synthetic speech may be superposed on music that the user is listening to, and may be provided to the user. Fig. 6 is a block diagram showing the functional arrangement of an information service apparatus according to this embodiment. Note that the same reference numerals in Fig. 6 denote the same parts as those in Fig. 1, and a description thereof will be omitted. Referring to Fig. 6, reference numeral 601 denotes a music data holding unit which holds music data. By sequentially outputting the held data as a signal to the audio output device 103, the user who wears the audio output device 103 can listen to music.

Reference numeral 602 denotes an acoustic processing unit which superposes music data sequentially output from the music data holding unit 601 and synthetic speech generated by the text-to-speech synthesis unit 106. In the superposing process, the waveforms of two data may be simply superposed, or the tone volume, speed, and frequency of speech or music data may be adjusted before superposing so as to allow the user to easily hear the synthetic speech.

### [Fourth Embodiment]

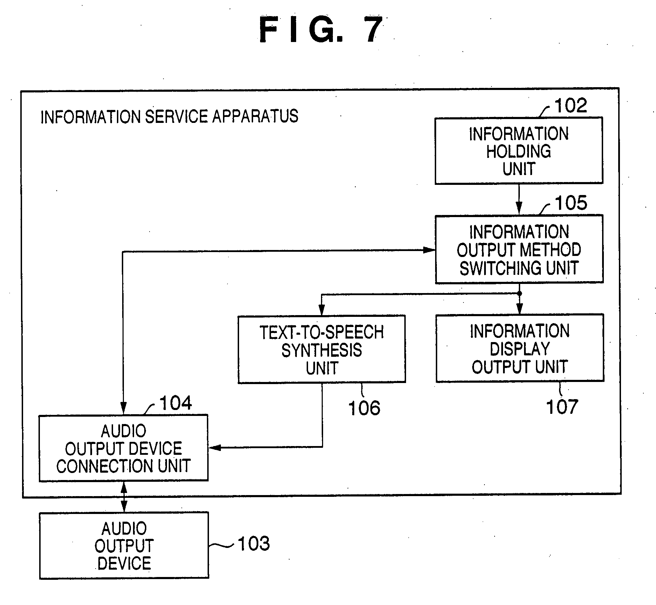

In the above embodiments, information to be provided to the user is an e-mail message or Web information immediately after it is received via the network (network 302 shown in Fig. 3). However, information to be provided to the user is not limited to that received via the network, but may be information held in advance in the information service apparatus. That is, in such case, the information service apparatus does not require any communication unit 101. Fig. 7 is a block diagram showing the functional arrangement of an information service apparatus according to this embodiment. The arrangement shown in Fig. 7 is substantially the same as that shown in Fig. 1, except that the communication unit 101 is omitted from the arrangement shown in Fig. 1. Note that information held in advance in the information service apparatus is held in the information holding unit 102.

### [Fifth Embodiment]

In the above embodiments, information to be received is text information of an e-mail message or Web information. Hence, when the audio output device 103 is connected to the information service apparatus, synthetic speech must be generated based on this text information. However, when information to be received is a set of the text information and speech information used to read this text information aloud, the text-to-speech synthesis unit 106 can be omitted from the arrangement shown in Fig. 1. That is, when the audio output device 103 is connected to the information service apparatus, the information output method switching unit 105 outputs received speech information to the audio output device 103; when the audio output device 103 is not connected to the information service apparatus, the unit 105 outputs the received text information to the information display output unit 107.

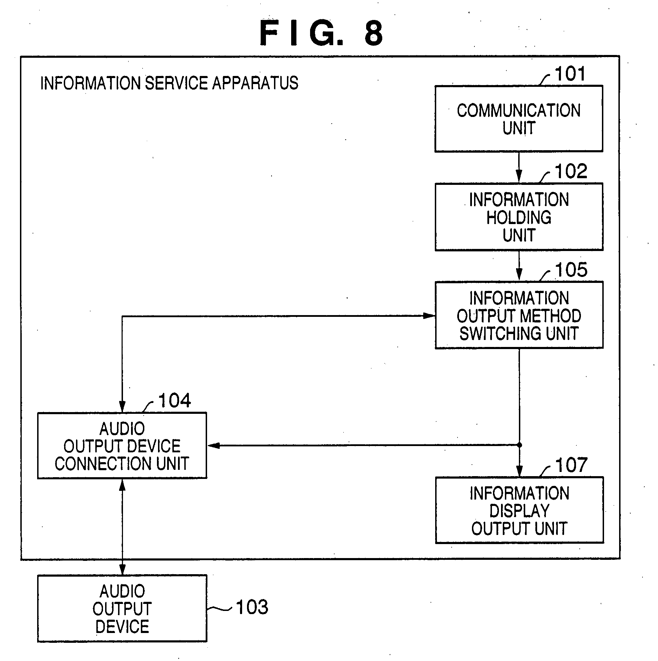

Fig. 8 is a block diagram showing the functional arrangement of an information service apparatus according to this embodiment. Note that the arrangement shown in Fig. 8 is substantially the same as that shown in Fig. 1, except that the text-to-speech synthesis unit 106 is omitted from the arrangement shown in Fig. 1.

### [Sixth Embodiment]

In the above embodiments, when information to be provided to the user is provided by means of synthetic speech, the synthetic speech is merely sent to the audio output device 103. In addition, text information used upon generating this synthetic speech may also be displayed on the information display output unit 107. That is, when the audio output device 103 is connected to the information service apparatus, the user can be provided with information by synthetic speech, and can visually confirm the provided information by viewing the text information displayed on the information display output unit 107.

### [Seventh Embodiment]

In the above embodiments, the information service method is switched to either an audible or visible output depending on whether or not the audio output device 103 is connected to the information service apparatus. An information service apparatus according to this embodiment communicates with information devices such as terminals, AV devices, home electric appliances, and the like around the information service apparatus, determines based on meta information or the like sent from the information devices if a current space around the user (who currently holds the information service apparatus) is a private or public space, and then switches the information service method.

That is, if the type of the current space around the user is a private space, the information service method may be either an audible or visible output. However, if the type of the current space around the user is a public space, it is not preferable to provide information as an audible output in consideration of inconvenience to all around the user, and privacy and secrecy of information to be provided. Hence, the information service apparatus according to this embodiment switches the information service method on the basis of the type of the current space around the user. Assume that, in the following description, the user brings the information service apparatus with him or her, and the current space around the user is the same as that of the information service apparatus.

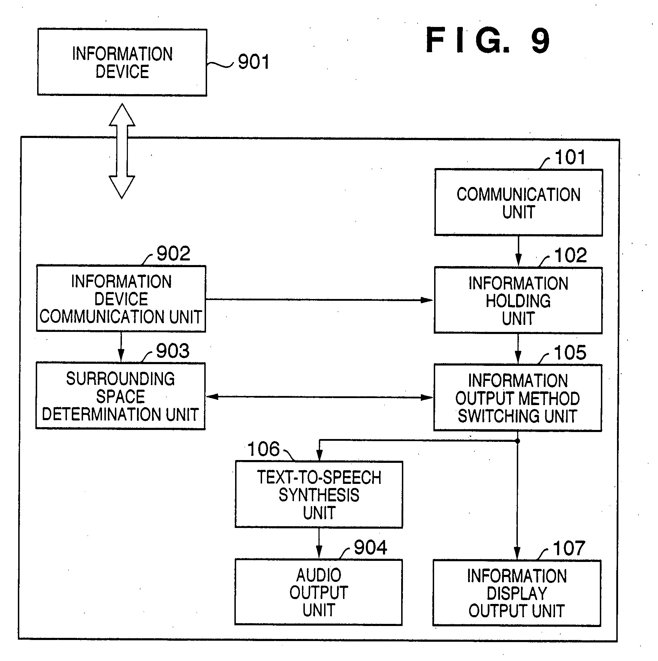

Fig. 9 is a block diagram showing the functional arrangement of the information service apparatus according to this embodiment. Note that the same reference numerals in Fig. 9 denote the same parts as those in Fig. 1, and a description thereof will be omitted. Referring to Fig. 9, reference numeral 901 denotes the aforementioned information device with which the information service communicates. Reference numeral 902 denotes an information device communication unit used when the information service apparatus communicates with the information device. Reference numeral 903 denotes a surrounding space determination unit which determines the state of the current space around the user on the basis of information acquired via a communication with the information device 901. Reference numeral 904 denotes an audio output unit which outputs speech generated by the text-to-speech synthesis unit 106. In this embodiment, an external headphone, built-in loudspeaker, or the like may be used as the audio output unit 904.

The process to be executed by the information service apparatus with the arrangement according to this embodiment will be described below using Fig. 9. A case will be explained below wherein the user is in a private space (e.g., in his or her room, in a vehicle, or the like). If the user is in a private space, the information device communication unit 902 communicates with the information device 901. The information device 901 may include AV devices, computers, home electric appliances, and the like, or may be a base station that exclusively makes a communication. A communication method may adopt wireless communication methods using, e.g., Bluetooth, infrared rays, and the like or a communication method using a wired cable. Or, a communication method common to that of the communication unit 101 may be adopted. In order to make the current space around the user equal to that around the information device, it is preferable that the distance between the information service apparatus and information device 901 be relatively small.

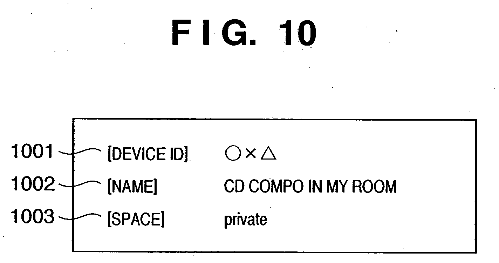

The information service apparatus (information device communication unit 902) receives meta information shown in, e.g., Fig. 10, from the information device 901 via a communication with it. Fig. 10 shows an example of meta information. Referring to Fig. 10, reference numeral 1001 denotes an ID which is used to specify an information device and may use a Mac address or the like. Reference numeral 1002 denotes a name assigned to the information device. Reference numeral 1003 denotes information indicating the type of space. This information 1003 represents whether a space around that information device is a private or public space. When the information device communication unit 902 receives this information 1003, the surrounding space determination unit 903 can determine with reference to this information 1003 whether or not the type of the space around the user is a private or public space.

This determination result is sent to the information output method switching unit 105. If the determination result indicates a private space, the information output method switching unit 105 outputs synthetic speech generated by the text-to-speech synthesis unit 106 to the audio output unit 904 as in the first embodiment. On the other hand, if the determination result indicates a public space, the unit 105 controls the information display output unit 107 to display text information received by the communication unit 101 as in the first embodiment.

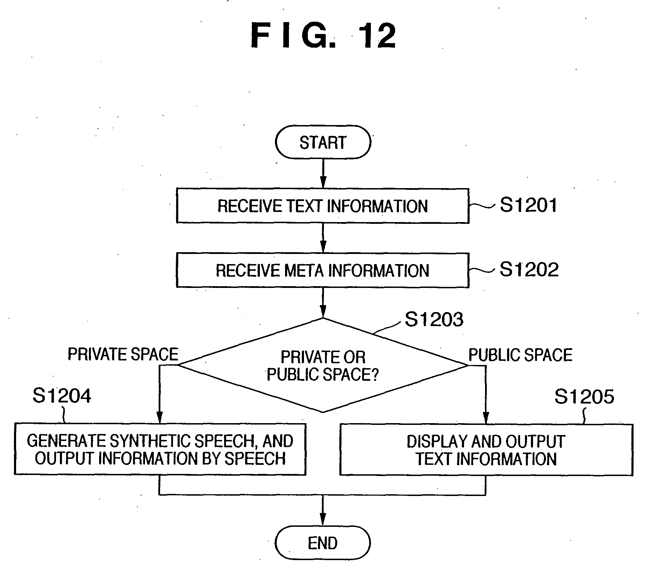

Fig. 12 is a flow chart of the process to be executed by the information service apparatus according to this embodiment. The communication unit 101 receives text information such as an e-mail message, Web information, or the like from the network (step S1201), and the received text information is held in the information holding unit 102. On the other hand, the information device communication unit 902 receives meta information from the information device 901, and sends it to the surrounding space determination unit 903 (step S1202). The surrounding space determination unit 903 refers to information indicating the type of space included in this meta information (step S1203). If the type of space of the referred information indicates a private space, synthetic speech generated by the text-to-speech synthesis unit 106 is output to the audio output unit 904 as in the first embodiment (step S1204). On the other hand, if the determination result indicates a public space, the text information received by the communication unit 101 is displayed on the information display output unit 107 as in the first embodiment (step S1205).

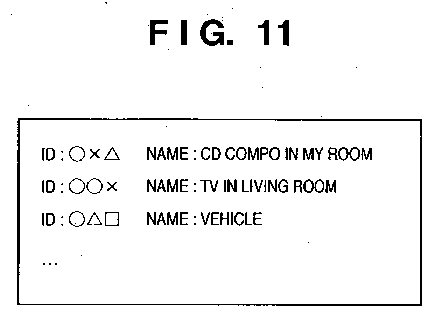

The space determination method by the surrounding space determination unit 903 is not limited to such specific method. If the meta information shown in Fig. 10 does not contain any information 1003 indicating the type of space, a list shown in, e.g., Fig. 11, which indicate information devices present in private spaces, may be set in advance in the surrounding space determination unit 903, which refers to this list. If the surrounding space determination unit 903 determines with reference to this list that the ID or name received from the information device with which the information service apparatus is currently making a communication is included in the list shown in Fig. 11, it can determine that the information service apparatus is present in a private space; otherwise, it can determine that the information service apparatus is present in a public space.

Conversely, information devices which are present in a public space may be registered in this list. In this case, if the surrounding space determination unit 903 determines with reference to this list that the ID or name received from the information device with which the information service apparatus is currently making a communication is included in the list shown in Fig. 11, it can determine that the information service apparatus is present in a public space; otherwise, it can determine that the information service apparatus is present in a public space.

Also, the space determination method implemented by the information service apparatus according to this embodiment may be applied to the information service apparatuses according to the above embodiments, and the information service method may be switched based on this determination result.

### [Eighth Embodiment]

When a program that implements the process described in each of the above embodiments may be stored in a storage medium, and the information service apparatus is added with an arrangement for reading out a program and data from the storage medium, a program and data required to make the information service apparatus execute the process explained in each of the above embodiments may be read out from this storage medium, and the process explained in each of the above embodiments may be implemented using the readout program and data. Also, the process explained in each of the above embodiments may be implemented by hardware.

### [Another Embodiment]

Furthermore, the present invention is not limited to the system and method alone for implementing the aforementioned embodiments, but the scope of the present invention includes a case wherein the above embodiments are achieved by supplying a program code of software that can implement the functions of the above-mentioned embodiments to a computer (or a CPU or MPU) in a system or apparatus, and making the computer control various devices in the system or apparatus.

In this case, the program code itself read out from the storage medium implements the functions of the above-mentioned embodiments, and the program code itself, and means for supplying the program code to the computer (i.e., a storage medium which stores the program code) are included in the scope of the present invention.

As the storage medium for storing such program code, for example, a floppy® disk, hard disk, optical disk, magneto-optical disk, CD-ROM, magnetic tape, nonvolatile memory card, ROM, and the like may be used.

The program is included in the scope of the embodiments not only when the functions of the above embodiments are implemented by controlling various devices according to the supplied program code alone but also when the functions of the embodiments are implemented by collaboration of the program and an OS (operating system) or another application software running on the computer.

Furthermore, the scope of the present invention includes a case wherein the functions of the above-mentioned embodiments are implemented by some or all of actual processing operations executed by a CPU or the like arranged in a function extension board or a function extension unit, which is inserted in or connected to the computer, after the supplied program code is written in a memory of the extension board or unit.

As described above, according to the present invention, means for providing information to the user can be appropriately switched in accordance with an environment in which the user acquires the information.

As many apparently widely different embodiments of the present invention can be made without departing from the spirit and scope thereof, it is to be understood that the invention is not limited to the specific embodiments thereof except as defined in the claims.

## Claims

1. An information service apparatus which comprises display means for displaying text information, and can be connected to an audio output device that can output speech information corresponding to the text information, **characterized by** comprising:
determination means for determining if the audio output device is connected; and
switching control means for making output destination switching control that outputs the speech information corresponding to the text information to the audio output device when said determination means determines that the audio output device is connected, and outputs the text information to the display means when said determination means determines that the audio output device is not connected.

2. The apparatus according to claim 1, **characterized by** further comprising:
exchange means for exchanging information with an external apparatus via a network, and
in that the text information is information which is received by the exchange means from the external apparatus via the network, and the information includes mail information and Web information.

3. The apparatus according to claim 1 or 2, **characterized by** further comprising:
text-to-speech synthesis means for executing a text-to-speech synthesis process on the basis of the text information to generate synthetic speech as the speech information.

4. The apparatus according to claim 3, **characterized by** further comprising:
notification means for, when the synthetic speech generated by said text-to-speech synthesis means is to be output to the audio output device or when the text information is to be output to the display means, notifying the user of an output in a corresponding case.

5. The apparatus according to claim 3, **characterized by** further comprising:
superposing means for superposing the synthetic speech generated by said text-to-speech synthesis means and a sound different from the synthetic speech, and
in that when the audio output device has already output a sound, said superposing means superposes the synthetic speech with the sound, and the audio output device outputs the sound superposed with the synthetic speech.

6. The apparatus according to claim 3, **characterized in that** when said switching control means makes control that outputs the synthetic speech generated by said text-to-speech synthesis means to the audio output device, said switching control means further makes control that outputs the text information to the display means.

7. An information service apparatus which comprises display means for displaying text information, text-to-speech synthesis means for executing a text-to-speech synthesis process on the basis of the text information to generate synthetic speech, and audio output means that can output the synthetic speech, **characterized by** comprising:
reception means for receiving information indicating a type of space;
determination means for determining a type of space indicated by the information with reference to the information received by said reception means; and
switching control means for making output destination switching control that outputs the synthetic speech generated by the text-to-speech synthesis means to the audio output means, or outputs the text information to the display means, in accordance with a determination result of said determination means.

8. The apparatus according to claim 7, **characterized in that** said determination means determines whether the type of space indicated by the information is a private or public space, and
said switching control means makes the output destination switching control that outputs the synthetic speech generated by the text-to-speech synthesis means to the audio output means when the type of space is a private space, and outputs the text information to the display means when the type of space is a public space.

9. An information service apparatus which comprises display means for displaying text information, text-to-speech synthesis means for executing a text-to-speech synthesis process on the basis of the text information to generate synthetic, and audio output means that can output the synthetic speech, **characterized by** comprising:
reception means for receiving information used to specify an external apparatus;
holding means for holding a list of information used to specify the external apparatus present in a predetermined space, and
switching control means for making output destination switching control that outputs the synthetic speech generated by the text-to-speech synthesis means to the audio output means, or outputs the text information to the display means, depending on whether or not the information received by said reception means is included in the list.

10. An information service method to be executed by an information service apparatus which comprises display means for displaying text information, and can be connected to an audio output device that can output speech information corresponding to the text information, **characterized by** comprising:
a determination step of determining if the audio output device is connected; and
a switching control step of making output destination switching control that outputs the speech information corresponding to the text information to the audio output device when it is determined in the determination step that the audio output device is connected, and outputs the text information to the display means when it is determined in the determination step that the audio output device is not connected.

11. An information service method to be executed by an information service apparatus which comprises display means for displaying text information, text-to-speech synthesis means for executing a text-to-speech synthesis process on the basis of the text information to generate synthetic speech, and audio output means that can output the synthetic speech, **characterized by** comprising:
a reception step of receiving information indicating a type of space;
a determination step of determining a type of space indicated by the information with reference to the information received in the reception step; and
a switching control step of making output destination switching control that outputs the synthetic speech generated by the text-to-speech synthesis means to the audio output means, or outputs the text information to the display means, in accordance with a determination result in the determination step.

12. An information service method to be executed by an information service apparatus which comprises display means for displaying text information, text-to-speech synthesis means for executing a text-to-speech synthesis process on the basis of the text information to generate synthetic speech, and audio output means that can output the synthetic speech, **characterized by** comprising:
a reception step of receiving information used to specify an external apparatus;
a holding step of holding a list of information used to specify the external apparatus present in a predetermined space, and
a switching control step of making output destination switching control that outputs the synthetic speech generated by the text-to-speech synthesis means to the audio output means, or outputs the text information to the display means, depending on whether or not the information received in the reception step is included in the list.

13. A program **characterized by** making a computer function as an information service apparatus of any one of claims 1 to 9.

14. A program **characterized by** making a computer execute an information service method of any one of claims 10 to 12.

15. A computer readable storage medium storing a program of claim 13 or 14.
